# EUROPEAN PATENT APPLICATION

(11) **EP 4 012 333 A1**
(43) Date of publication of application: **15.06.2022**
(21) Application number: 21212959.7
(22) Date of filing: 07.12.2021
(51) Int. Cl.: G01C 15/00

(54) **STABLE MOBILE PLATFORM FOR COORDINATE MEASUREMENT**

(30) Priority: 09.12.2020 US 202063123023 P
(71) Applicant: Faro Technologies, Inc., Lake Mary, FL 32746-6204 (US)
(72) Inventor: WAHEED, Mufassar, 70825 Korntal-Münchingen (DE); BOEHRET, Tobias, 70825 Korntal-Münchingen (DE); BRENNER, Mark, 70825 Korntal-Münchingen (DE); ZWEIGLE, Oliver, 70825 Korntal-Münchingen (DE); FRANK, Aleksej, 70825 Korntal-Münchingen (DE); RAMADNEH, Ahmad, 70825 Korntal-Münchingen (DE)
(74) Representative: Harris, Oliver John Richard

(57) **Abstract**

Scanner stabilizing systems are described. The systems include a moving base configured to receive a scanner, at least one motor operably connected to the base to control at least one of an orientation and a position of the moving base about an axis, at least one mounting structure configured to fixedly attached to a mobile apparatus and wherein the at least one motor is attached to a respective one of the at least one mounting structures, and a stabilization controller operably connected to the at least one motor, wherein the stabilization controller is configured to maintain an orientation of the scanner relative to an environment.

## Description

### CROSS REFERENCE TO RELATED APPLICATIONS

This application claims the benefit of U.S. Provisional Application Serial No. 63/123,023, filed December 9, 2020, the entire disclosure of which is incorporated herein by reference.

### BACKGROUND OF THE INVENTION

The subject matter disclosed herein relates to coordinate measurement devices and systems, and particularly to stable mobile platforms for use therewith.

The present disclosure relates to coordinate measuring devices and mobile platforms thereof. One set of coordinate measurement devices belongs to a class of instruments that measure three-dimensional (3D) coordinates of a target point by sending a beam of light to the point. The beam of light may impinge directly on the point or on a retroreflector target in contact with the point. In either case, the instrument determines the coordinates of the target point by measuring a distance and two angles to the target. The distance is measured with a distance-measuring device such as an absolute distance meter or an interferometer. The angles are measured with an angle-measuring device such as an angular encoder. The beam may be steered with a gimbaled mechanism, a galvanometer mechanism, or other mechanism.

A laser tracker is a particular type of coordinate-measuring device that tracks a retroreflector target with one or more beams emitted therefrom, which may include light from a laser or non-laser light source. Coordinate-measuring devices closely related to laser trackers are time-of-flight (TOF) scanners and a total station. A TOF scanner emits one or more beams of light to points on a surface. The TOF scanner then receives light reflected from the surface and, in response, determines a distance and two angles to each surface point. A total station is a 3D measuring device most often used in surveying applications. It may be used to measure the coordinates of a diffusely scattering target or a retroreflective target. Hereinafter, the terms coordinate measuring device or scanner are used in a broad sense to include, but is not limited to, laser trackers, theodolites, TOF laser scanners, triangulation scanners, line scanners, structured light scanners, photogrammetry systems, and total stations and to include dimensional measuring devices that emit or receive laser or non-laser light.

Although laser scanners are generally suitable for their intended purpose, some limitations still exist in tracker complexity, maintenance, resistance to shock, and identification of target objects. Further, at times, it may be beneficial and/or required to move a laser scanner or other coordinate measurement device. When moving a coordinate measurement device, the coordinate system may require resetting or recalibration, and having a system for efficiently moving and maintaining stability of such coordinate measurement devices may be helpful. What is needed is a laser scanner having features to overcome these limitations and provide other features and/or functionality thereto.

### BRIEF DESCRIPTION OF THE INVENTION

According to aspects of the present disclosure, scanner stabilizing systems are provided. The scanner stabilizing systems include a moving base configured to receive a scanner, at least one motor operably connected to the base to control at least one of an orientation and a position of the moving base about an axis, at least one mounting structure configured to fixedly attached to a mobile apparatus and wherein the at least one motor is attached to a respective one of the at least one mounting structures, and a stabilization controller operably connected to the at least one motor, wherein the stabilization controller is configured to maintain an orientation of the scanner relative to an environment.

In addition to one or more of the features described above, or as an alternative, further embodiments of the platforms for scanner stabilizing systems may include that the stabilization controller includes an inertial measurement unit (IMU).

In addition to one or more of the features described above, or as an alternative, further embodiments of the platforms for scanner stabilizing systems may include that the stabilization controller includes a proportional-integral-derivative (PID) controller.

In addition to one or more of the features described above, or as an alternative, further embodiments of the platforms for scanner stabilizing systems may include that the at least one motor is a brushless DC motor.

In addition to one or more of the features described above, or as an alternative, further embodiments of the platforms for scanner stabilizing systems may include that the at least one motor comprises a first motor and a second motor.

In addition to one or more of the features described above, or as an alternative, further embodiments of the platforms for scanner stabilizing systems may include that an axis is defined through the first motor and the second motor.

In addition to one or more of the features described above, or as an alternative, further embodiments of the platforms for scanner stabilizing systems may include that the orientation of the scanner relative to the environment is a horizontal orientation.

In addition to one or more of the features described above, or as an alternative, further embodiments of the platforms for scanner stabilizing systems may include a scanner mounted to the moving base.

According to aspects of the present disclosure, systems are provided. The systems include a mobile apparatus and a scanner stabilizing system. The scanner stabilizing system includes a moving base configured to receive a scanner, at least one motor operably connected to the base to control at least one of an orientation and a position of the moving base about an axis, at least one mounting structure fixedly attached to the mobile apparatus and wherein the at least one motor is attached to a respective one of the at least one mounting structures, and a stabilization controller operably connected to the at least one motor, wherein the stabilization controller is configured to maintain an orientation of the scanner relative to an environment. A scanner is mounted to the moving base.

In addition to one or more of the features described above, or as an alternative, further embodiments of the platforms for systems may include that the scanner is a laser scanner.

In addition to one or more of the features described above, or as an alternative, further embodiments of the platforms for systems may include that the mobile apparatus is a legged robot.

In addition to one or more of the features described above, or as an alternative, further embodiments of the platforms for systems may include that the legged robot comprises a trunk structure and a plurality of leg structures, wherein the at least one mounting structure is attached to the trunk structure.

In addition to one or more of the features described above, or as an alternative, further embodiments of the platforms for systems may include that the mobile apparatus is a mobile platform having a base structure and a plurality of wheel structures, wherein the at least one mounting structure is attached to the base structure.

In addition to one or more of the features described above, or as an alternative, further embodiments of the platforms for systems may include that the stabilization controller includes an inertial measurement unit (IMU).

In addition to one or more of the features described above, or as an alternative, further embodiments of the platforms for systems may include that the stabilization controller includes a proportional-integral-derivative (PID) controller.

In addition to one or more of the features described above, or as an alternative, further embodiments of the platforms for systems may include that the at least one motor is a brushless DC motor.

In addition to one or more of the features described above, or as an alternative, further embodiments of the platforms for systems may include that the at least one motor comprises a first motor and a second motor.

In addition to one or more of the features described above, or as an alternative, further embodiments of the platforms for systems may include that an axis is defined through the first motor and the second motor.

In addition to one or more of the features described above, or as an alternative, further embodiments of the platforms for systems may include that the orientation of the scanner relative to the environment is a horizontal orientation.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1A is a side view of a 3D scanning system that may be incorporated into embodiments of the present disclosure;
FIG. 1B is a perspective view of the 3D scanning system of FIG. 1A;
FIG. 2 is a schematic illustration of internal components of a 3D scanning system that may be incorporated into embodiments of the present disclosure;
FIG. 3 is a schematic illustration of components and orientation thereof of a 3D scanner that may be incorporated into embodiments of the present disclosure;
FIG. 4 is a schematic illustration of a mobile scanning system that can incorporate embodiments of the present disclosure;
FIG. 5 is a schematic illustration of a mobile scanning system that can incorporate embodiments of the present disclosure;
FIG. 6 is a schematic illustration of a scanner stabilizing system in accordance with an embodiment of the present disclosure; and
FIG. 7 is a schematic illustration of a mobile scanning system in accordance with an embodiment of the present disclosure.

The detailed description explains embodiments of the invention, together with advantages and features, by way of example with reference to the drawings.

### DETAILED DESCRIPTION OF THE INVENTION

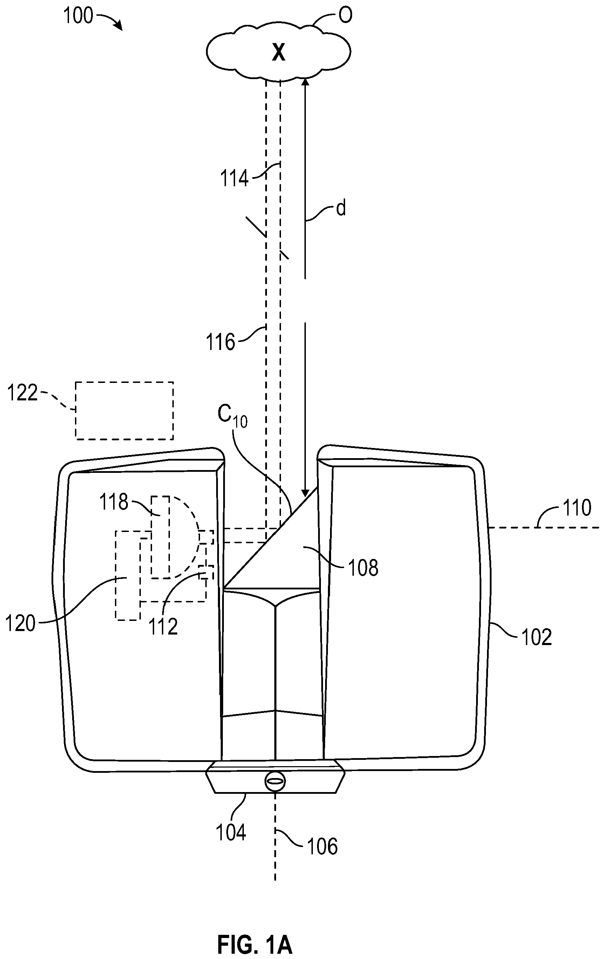

Referring to FIGS. 1A-1B, a 3D scanner 100 (e.g., a laser scanner) is shown that may be employed in embodiments of the present disclosure. The 3D scanner 100 may be used for optically scanning and measuring a scanned environment using laser based distance measurement methods. The 3D scanner 100 comprises a measuring head or housing 102 and a base 104. The housing 102 is mounted on the base 104 such that the housing 102 can rotate with respect to the base 104 about a first axis 106, driven by a first rotary drive (e.g., a motor). The rotation about the first axis 106 may be about the center of the base 104. The housing 102 comprises a mirror 108, which can rotate about a second axis 110, driven by a second rotary drive (e.g., a motor). Referring to a normal upright position of the 3D scanner 100, the first axis 106 may be called the vertical axis or azimuth axis and the second axis 110 may be called the horizontal axis or zenith axis. The 3D scanner 100 may comprise a gimbal point or center C₁₀ that is the intersection point of the first axis 106 and the second axis 110.

The housing 102 is provided with an electromagnetic radiation emitter 112, such as a light emitter, that emits an emission light beam 114. In an embodiment, the emission light beam 114 may be coherent light such as a laser. As will be appreciated by those of skill in the art, the laser beam may have a wavelength range of approximately 300 to 1600 nanometers, for example, 790 nanometers, 905 nanometers, 1550 nanometers, or less than 500 nanometers. It should be appreciated that other electromagnetic radiation beams having greater or smaller wavelengths may also be used. The emission light beam 114 may be amplitude or intensity modulated, for example, with a sinusoidal waveform, rectangular waveform, etc. Alternatively, the emission light beam 114 may be otherwise modulated, for example, with a chirp signal, or coherent receiver methods may be used. In the present embodiment, the emission light beam 114 is a continuous wave laser beam. However, it may also be a pulsed laser. The emission light beam 114 is emitted by the light emitter 112 onto the mirror 108, where it is deflected to the environment of the 3D scanner 100.

A reflected light beam, hereinafter called a reception light beam 116, is reflected from the scanned environment by an object O that is within the scanned environment. The reflected or scattered light is intercepted by the rotary mirror 108 and directed onto a light receiver 118 with reception optics. The directions of the emission light beam 114 and the reception light beam 116 result from the angular positions of the housing 102 and the mirror 108 about the axes 106 and 110, respectively. The angular positions, in turn, depend on the corresponding rotary drives. The angle of rotation about the first axis 106 is measured by a first angular encoder. The angle of rotation about the second axis 110 is measured by a second angular encoder. The use of angular encoders is well understood and implementation thereof, along with the rotary drives or motors, will not be described further in order to simplify discussion of the present configuration.

A controller 120 is coupled to communicate with the light emitter 112 and the light receiver 118 inside the housing 102. It should be appreciated that while the controller 120 is illustrated as being a single device or circuit, this is for exemplary purposes and the claims should not be so limited. In other embodiments, the controller 120 may be comprised of a plurality of devices or circuits. In some embodiments, a portion of the controller 120 may be arranged outside the housing 102, for example, as a computer connected to the base 104 or other components of the 3D scanner 100.

The operation of the 3D scanner 100 is controlled by the controller 120. The controller 120 is a suitable electronic device capable of accepting data and instructions, executing the instructions to process the data, and, in some configurations, presenting the results. The controller 120 may accept instructions through a user interface, or through other means such as but not limited to electronic data card, voice activation means, manually-operable selection and control means, radiated wavelength and electronic or electrical transfer. The controller 120 may be and/or may include a microprocessor, microcomputer, a minicomputer, an optical computer, a board computer, a complex instruction set computer, an ASIC (application specific integrated circuit), a reduced instruction set computer, a computer network, a desktop computer, a laptop computer, a scientific computer, a scientific calculator, or a hybrid or combination of any of the foregoing.

The controller 120, in some embodiments, is capable of converting an analog voltage or current level provided by sensors (e.g., encoders) into digital signal(s). Alternatively, sensors may be configured to provide a digital signal to the controller 120, or an analog-to-digital (A/D) converter (not shown) maybe coupled between sensors and the controller 120 to convert the analog signal provided by sensors into a digital signal for processing by the controller 120. The controller 120 is configured to receive and use the digital signals as input to various processes for controlling the 3D scanner 100. The digital signals represent one or more system data including but not limited to angular position about the first axis 106, angular position about the second axis 110, time-of-flight of the light beams 114, 116, and the like.

In general, the controller 120 accepts data from sensors, light emitter 116 and light receiver 120, and is given certain instructions for the purpose of determining three-dimensional coordinates of points in the scanned environment. Further, the controller 120 may compare operational parameters to predetermined variances and if a predetermined variance is exceeded, the controller 120 can generate a signal that may be used to indicate an alarm to an operator. Additionally, the signal may initiate other control methods that adapt the operation of the laser scanner 100 such as changing or stopping the rotation about the first axis 106 once a predetermined angular position is achieved.

In some embodiments, the 3D scanner 100 may optionally include an imaging camera 122 that acquires two-dimensional (2D) color images of the scanned environment as a scan is performed. The 2D images may be synchronized with the acquired 3D coordinate points obtained by the 3D scanner 100. This allows for the association of a color and/or a texture with the 3D coordinate point by the controller 120. In some embodiments, the imaging camera 122 is disposed internally to the laser scanner 100 and acquires images via the mirror 108.

In addition to being coupled to one or more components within the 3D scanner 100, the controller 120 may also be coupled to external computer networks such as a local area network (LAN) and/or the Internet. A LAN interconnects one or more remote computers, which are configured to communicate with the controller 120 using a well-known computer communications protocol such as TCP/IP (Transmission Control Protocol/Internet Protocol), RS-232, ModBus, and the like. Additional systems, similar to 3D scanner 100 (i.e., multiple scanners), may be connected to a LAN with respective controllers. Each of the systems may be configured to send and receive data to and from remote computers and other systems. In some embodiments, the LAN may be connected to the Internet. An Internet connection can allow the controller 120 to communicate with one or more remote computers or other systems connected to the Internet.

The controller 120, in one non-limiting example, includes a processor coupled to a random access memory device, a non-volatile memory device, a read-only memory (ROM) device, one or more input/output controllers and/or elements as known in the art, and an optional LAN interface device via a data communications bus. In embodiments having a LAN interface device, the LAN interface device provides for communication between the controller and a network in a data communications protocol supported by the network, as noted above. The ROM device can be configured to store an application code, e.g., main functionality firmware, including initializing parameters, and boot code, for the processor of the controller 120. Application code also includes program instructions for causing the processor to execute any operation control methods of the 3D scanner 100, including starting and stopping operation, changing operational states of the 3D scanner 100, monitoring predetermined operating parameters, generation of alarms, etc. In an embodiment, the application code can create an onboard telemetry system that may be used to transmit operating information between the 3D scanner 100 and one or more remote computers or receiving locations. The information to be exchanged with remote computers and the 3D scanner 100 can include but are not limited to 3D coordinate data and images associated with a scanned environment.

The non-volatile memory device may be any form of non-volatile memory such as an EPROM (Erasable Programmable Read Only Memory) chip, a disk drive, or the like. Stored in the non-volatile memory device may be various operational parameters for the application code. The various operational parameters can be input to non-volatile memory device either locally, using a user interface or through use of a remote computer, or remotely via the Internet using a remote computer. It will be recognized that application code can be stored in non-volatile memory device or the read-only memory device of the 3D scanner 100.

The controller may include operational control methods embodied in application code. The methods are embodied in computer instructions written to be executed by the processor, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, Visual C++, C#, Objective-C, Java, Javascript ALGOL (algorithmic language), BASIC (beginners all-purpose symbolic instruction code), visual BASIC, ActiveX, HTML (HyperText Markup Language), Python, Ruby, and/or, for example, any combination or derivative of at least one of the foregoing. Additionally, an operator can use an existing software application such as a spreadsheet or database and correlate various cells with the variables enumerated in the algorithms. Furthermore, the software can be independent of other software or dependent upon other software, such as in the form of integrated software.

In an embodiment, the controller of the 3D scanner 100 may be configured to process data furnished to generate the 3D scans from images or data captured by the light receiver 118. The 3D scans in turn are joined or registered in a common coordinate frame of reference. For registering, known methods can be used, such as by identifying natural or artificial targets (i.e., recognizable structures within a scanned environment) in overlapping areas of two or more frames captured by the light receiver 118. In an embodiment, multiple frames may be dynamically registered using a local bundle adjustment method. Through identification of these targets, the assignment of two 3D scans may be determined by means of corresponding pairs. A whole scene (i.e., a plurality of frames) is thus gradually registered by the 3D scanner 100. In some embodiments, the individual frames may be registered to a point cloud generated by a laser scanner.

In an embodiment, the controller 120 further includes an energy source, such as battery. The battery may be an electrochemical device that provides electrical power for the controller 120. In an embodiment, the battery may also provide electrical power to the 3D scanner 100 (e.g., cameras, sensors, motors, projectors, etc.). In some embodiments, the battery may be separate from the controller 120 (e.g. a battery pack). In an embodiment, a second battery (not shown) may be disposed in the housing 102 to provide electrical power to the other components of the 3D scanner 100 (e.g., cameras, sensors, motors, projectors, etc.). Alternatively, in some embodiments, power may be supplied from an outlet or other continuous power source, as will be appreciated by those of skill in the art.

It should be appreciated that while the controller 120 is illustrated as being installed within the housing 102, this is for exemplary purposes and the claims should not be so limited. In other embodiments, the controller 120 may be separate from the housing 102. Further, while embodiments herein illustrate the controller 120 as being part of a single 3D scanner 100, this is for exemplary purposes and the claims should not be so limited. In other embodiments, the controller 120 may be coupled to and combine three-dimensional coordinate data from multiple 3D scanners 100.

Referring again to FIG. 1A, the controller 120 includes operation control methods embodied in application code. The controller 120 is configured to perform operational control methods that determine, for a multitude of measuring points *X*, a corresponding number of distances *d* between the 3D scanner 100 and the measuring points *X* on object O in the scanned environment. The distance to a particular measuring point *X* is determined based at least in part on the speed of light in air through which electromagnetic radiation propagates from the 3D scanner 100 to the measuring point *X*. In an embodiment, the phase shift in a modulated light beam 114, 116 sent to the measuring point *X* and received from it, is determined and evaluated to obtain a measured distance *d*.

The speed of light in air depends on the properties of the air such as the air temperature, barometric pressure, relative humidity, and concentration of carbon dioxide. Such air properties influence the index of refraction of the air. The speed of light in air is equal to the speed of light in vacuum divided by the index of refraction. A laser scanner of the type discussed herein is based on the time-of-flight of the light in the air (i.e., the roundtrip time for the light to travel from the device to the object and back to the device (duration of light beam 114, 116)). A method of measuring distance based on the time-of-flight of light (or the time-of-flight of any type of electromagnetic radiation) depends on the speed of light in air and is therefore distinguishable from methods of measuring distance based on triangulation or other methods.

In an embodiment, the housing 102 may include a display device 124, as shown in FIG. IB. integrated into the 3D scanner 100. The display device 124 can include a user interface, which may be a graphical touch screen. For example, the display device 124 may have a user interface that allows the operator to provide measurement instructions to the 3D scanner 100, in particular to set the parameters or initiate the operation of the 3D scanner 100, and the display device 124 may also display measurement results.

In an embodiment, the scanning of a scanned environment by the 3D scanner 100 may take place by rotating the mirror 108 relatively quickly about the second axis 110 while rotating the housing 102 relatively slowly about the first axis 106, thereby emitting the light 114 in a spiral pattern. In a non-limiting example, the rotary mirror 108 may be driven to rotate at a speed of 5820 revolutions per minute. A scan is defined to be the entity of measuring points *X* in such a measuring. For such a scan, the center C₁₀ defines the origin of the local stationary reference system. The base 104 rests in this local stationary coordinate frame of reference.

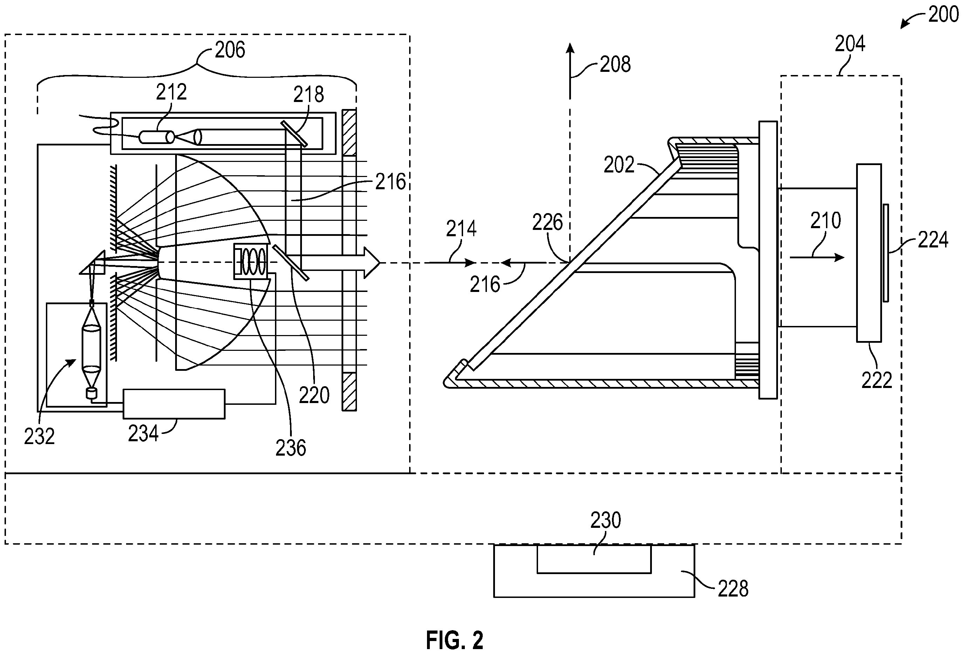

Turning now to FIG. 2, a schematic illustration of a 3D scanner 200 that may incorporate embodiments of the present disclosure is shown. The 3D scanner 200 may be similar to that shown and described with respect to FIGS. 1A-1B and thus some features may not be discussed in detail again. In this illustrative embodiment, the 3D scanner 200 includes a rotary mirror 202 mounted within a housing 204. The 3D scanner 200 further includes a sensor assembly 206 arranged relative to the rotary mirror 202 such that light may be projected onto the rotary mirror 202 and light reflected thereon may be received at one or more light detectors of the sensor assembly 206. The housing 204 may be rotatable about a first axis 208 and the rotary mirror 202 may be rotatable about a second axis 210.

As shown, the sensor assembly 206 includes a light emitter 212. The light emitter 212 may be configured to emit and generate an emitted light beam 214 that is projected upon the rotary mirror 202, reflects off an object, and is subsequently reflected off of the rotary mirror 202 and back into the sensor assembly as a reflected light beam 216, as described above. In this embodiment, light 216 from the light emitter 212 reflects off a fixed mirror 218 and travels to dichroic beam-splitter 220 that reflects the light 216 from the light emitter 212 onto the rotary mirror 202. In this embodiment, the rotary mirror 202 is rotated by a motor 222 and the angular/rotational position of the rotary mirror 202 is measured by an angular encoder 224. Thus, the emitted light beam 214 may be reflected and direction about an environment in which the 3D scanner 200 is located. The 3D scanner 200 includes a gimbal point 226 that is a center of rotation about the first axis 208 and the second axis 210.

The housing 204 may be mounted to a base 228 configured to rotate the housing 204 about the first axis 208. The base 228 may include a respective angular encoder 230 configured to measure a rotation of the base 228 about the first axis 208. The combination of the rotation about the first axis 208 and the second axis 208, and projection of light and receipt thereof, enables scanning of an environment.

The sensor assembly 206 includes a light receiver 232. Coupled to the light emitter 212 and the light receiver 232 is a controller 234, as described above. The controller 234 is configured to determine, for a multitude of measuring points in an environment, a corresponding number of distances between the 3D scanner 200 and the points in the environment. The controller 234 is further configured to obtain or accept data from encoders 224, 230, light receiver 232, light source 212, and any additional components (e.g., auxiliary/imaging camera) and is given certain instructions for the purpose of generating a 3D point cloud of a scanned environment.

As shown, the 3D scanner 200 further includes an image acquisition device 236 (e.g., a central imaging camera) located internally to the housing 204 and may have the same optical axis as the 3D scanner device (e.g., second axis 210). In this embodiment, the image acquisition device 236 is integrated into the housing 204 (e.g., measuring head) and arranged to acquire images along the same optical pathway as an emitted light beam 214 and reflected light beam 216. In this configuration, the dichroic beam-splitter 220 allows light to pass through at wavelengths different than the wavelength of light 216 that is emitted from the light emitter 212. For example, the light emitter 212 may be a near infrared laser light (for example, light at wavelengths of 780 nm or 1150 nm), with the dichroic beam-splitter 220 configured to reflect the infrared laser light while allowing visible light (e.g., wavelengths of 500 to 700 nm) to transmit therethrough. In other embodiments, the determination of whether the light passes through the beam-splitter 220 or is reflected depends on the polarization of the light. The image acquisition device 236 can be configured to obtain 2D images of the scanned area to capture image data to add to the scanned image. In the case of a built-in imaging camera having an optical axis coincident with that of the 3D scanning device, the direction of the camera view may be easily obtained by simply adjusting the steering mechanisms of the scanner - for example, by adjusting the azimuth angle about the first axis 208 and by steering the rotary mirror 202 about the second axis 210.

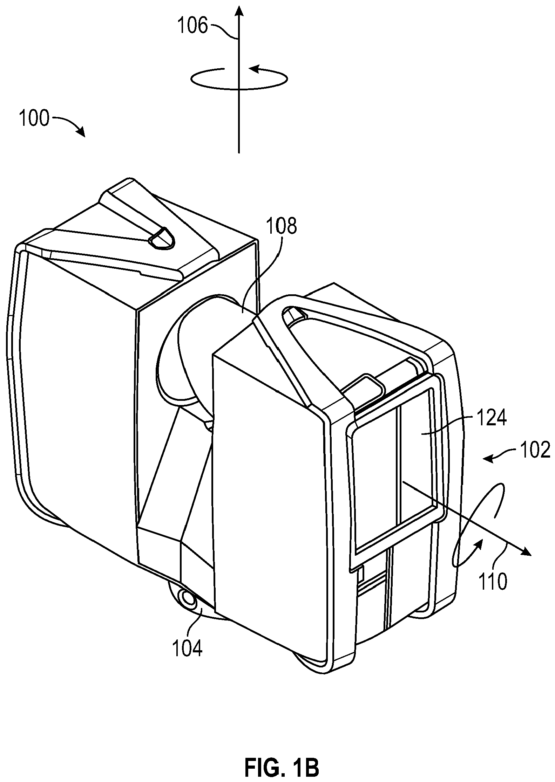

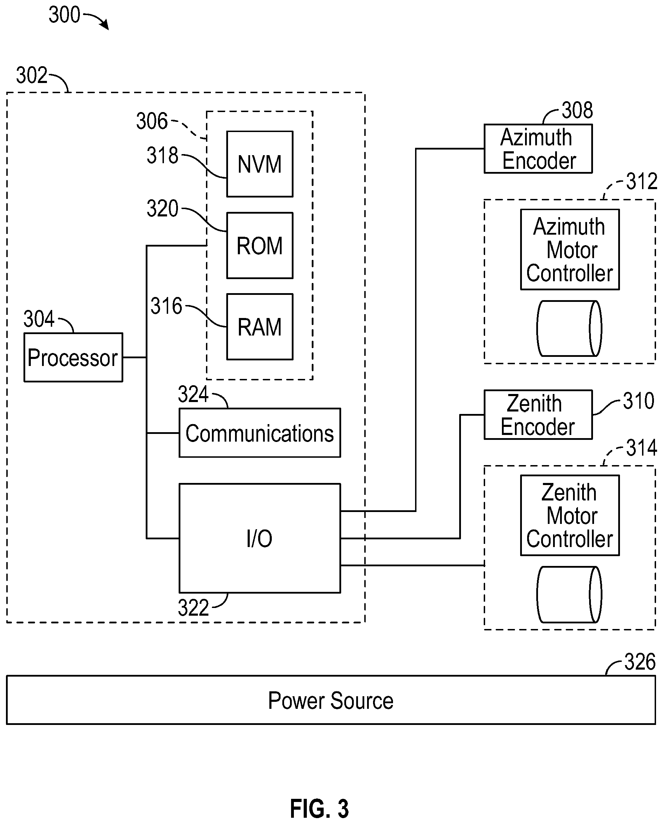

Referring now to FIG. 3, elements of a laser scanner 300 that may incorporate embodiments of the present disclosure are shown. The laser scanner 300 may be employed and configured, for example, similar to the systems shown and described above with respect to FIGS. 1 and 2. A controller 302 is provided within the laser scanner 300. The controller 302 is a suitable electronic device capable of accepting data and instructions, executing the instructions to process the data, and presenting the results. The controller 302 includes one or more processing elements, such as a processor 304. The processor 304 may be one or more of microprocessors, field programmable gate arrays (FPGAs), digital signal processors (DSPs), and generally any devices capable of performing computing functions. The processor 304 can have access to or may be operably connected to a memory 306 configured to store information and data.

The controller 302, in some embodiments, is configured to convert an analog voltage or current level provided by a light receiver into a digital signal to determine a distance from the laser scanner 300 to an object in an environment. The controller 302 is configured to employ or process digital signals that act as input to various processes for controlling the laser scanner 300. The digital signals represent data including, but not limited to, distance to an object, images of the environment, images acquired by a panoramic camera, angular and/or rotational measurements by a first axis or azimuth encoder 308, and angular and/or rotational measurements by a second axis or zenith encoder 310.

In general, the controller 302 accepts data from the encoders 308, 310, a light receiver, a light source, and a panoramic camera and is given certain instructions for the purpose of generating a 3D point cloud of a scanned environment. The controller 302 is configured to provide operating signals to the light source, the light receiver, the panoramic camera, an azimuth motor controller 312, and a zenith motor controlled 314. The controller 302 is configured to compare operational parameters to predetermined variances and, if the predetermined variance is exceeded, the controller 302 is configured to generate a signal that alerts an operator to a condition. The data received by the controller 302 may be displayed on a user interface coupled to controller 302. The user interface may be one or more LEDs (light-emitting diodes) or LED display, an LCD (liquid-crystal diode) display, a CRT (cathode ray tube) display, a touch-screen display, or the like. A keypad may also be coupled to the user interface for providing data input to the controller. In one embodiment, the user interface is arranged or executed on a mobile computing device that is coupled for communication, such as via a wired or wireless communications medium (e.g. Ethernet, serial, USB, Bluetooth^{™} or WiFi) for example, to the laser scanner 300.

The controller 302 may also be coupled to one or more external computer networks such as a local area network (LAN) and the Internet. A LAN interconnects one or more remote computers, which are configured to communicate with controller 302 using a well- known computer communications protocol such as TCP/IP (Transmission Control Protocol/Internet(^) Protocol), RS-232, ModBus, and the like. Additional systems may also be connected to LAN with a controller in each of these systems being configured to send and receive data to and from remote computers and other systems. The LAN may be connected to the Internet. This connection may be configured to allow the controller 302 to communicate with one or more remote computers connected to the Internet.

The processor 304, as noted above, is coupled to the memory 306. The memory 306 may include one or more random access memory (RAM) devices 316, one or more non-volatile memory (NVM) devices 318, and/or one or more read-only memory (ROM) devices 320. In addition, the processor 304 may be connected to one or more input/output (I/O) controllers 322 and a communications circuit 324. In an embodiment, the communications circuit 324 is configured to provide an interface that allows wireless or wired communication with one or more external devices or networks, such as the LAN discussed above. The laser scanner 300 may include or be electrically connected a power source 326, which is configured to supply electrical power to the various electronic components and devices of the laser scanner 300.

The laser scanners described above may be employed with embodiments of the present disclosure to perform scanning of shafts and similar structures. Such laser scanners can include software for performing operations. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (HyperText Markup Language), Python, Ruby and any combination or derivative of at least one of the foregoing.

Mobile scanning may be achieved by mounting a coordinate measurement device, such as the laser scanner shown and described with respect to FIGS. 1A-1B, 2, and 3, to a mobile platform. It will be appreciated that other types of scanners (2D or 3D) may be employed for imaging and/or scanning of an environment, such as but not limited to laser trackers, total stations, triangulation scanners, line scanners, structured light scanners, and photogrammetry devices for example. The scanners may be mounted on a moving platform to enable movement of the scanner through an environment. The moving platforms can include, without limitation, a tripod dolly or a robotic platform (e.g., wheeled, treaded, or legged robot). Moving over uneven surfaces with a tripod dolly can cause vibrations and shocks due to irregularities on the surface (e.g., bumps, cracks, grooves, debris, etc.). In the case of a legged robot, such vibrations and/or shocks may occur over any surface due to a movement or step of the legged robot. These vibrations and shocks may be transmitted to the scanner which can cause damage and/or inaccuracies during data acquisition. Further, such vibrations and/or shock may cause decalibration of the scanner.

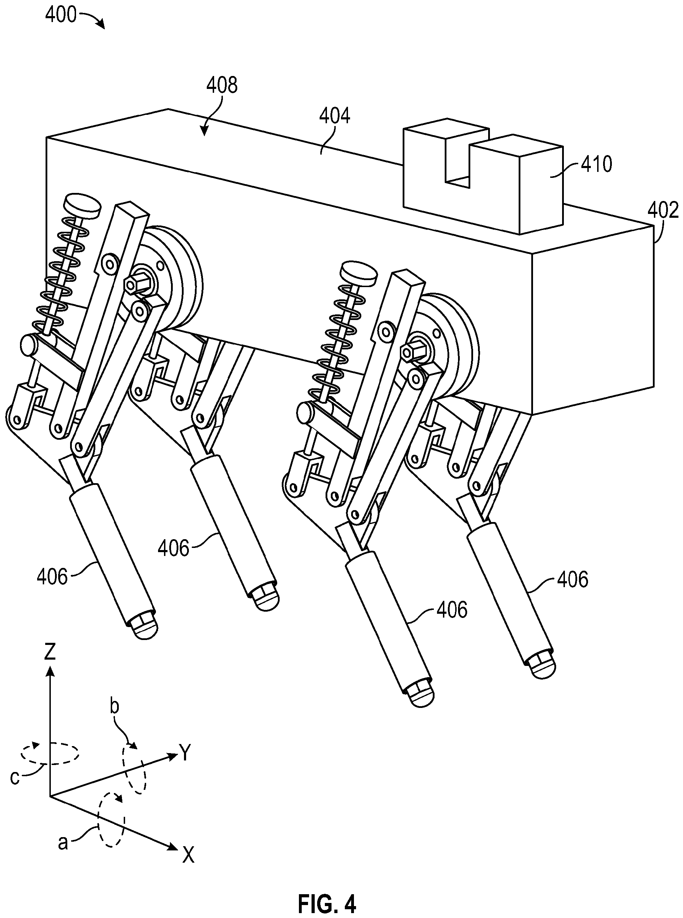

Turning now to FIG. 4, a schematic illustration of a mobile scanning system 400 having a mobile apparatus 402 is shown. The mobile apparatus 402, in this embodiment, is a legged robot that includes a trunk structure 404 and a plurality of leg structures 406. The trunk structure 404 can include various internal components configured to enable movement of the mobile apparatus 402 by operation, actuation, and control of the leg structures 406. Such internal components can include, without limitation, processors, electronic circuits, electronic actuators, communication lines, power sources, and the like. The trunk structure 404 includes a top surface 408 to which a scanner 410 can be mounted. The scanner 410 may be similar to that shown and described above in FIGS. 1A-3, although other types of scanners may be employed in accordance with embodiments of the present disclosure.

The leg structures 406 may be controlled to enable a walking motion of the mobile apparatus 402 that allows movement through an environment. The movement of the mobile apparatus 402 may be controlled by an operator (e.g., remote-controlled) or may be autonomously operated using internal components. In an embodiment, the mobile apparatus 402 may be semi-autonomous and follow a predetermined path through the environment where the path is defined by the operator. The leg structures 406 may be articulated and configured to move in any combination of the x-, y-, and z-directions, and may include hinged joints and/or ball joints. If a scan is to be obtained by the scanner 410 during movement of the mobile apparatus 402 through an environment, the step motion of the leg structures 406 may impact the ability to obtain a scan having a desired level of accuracy. Further, as each step of the leg structures 406 may cause vibrations or shocks, such movement may change the calibration of the scanner 410 outside of desired ranges, for example.

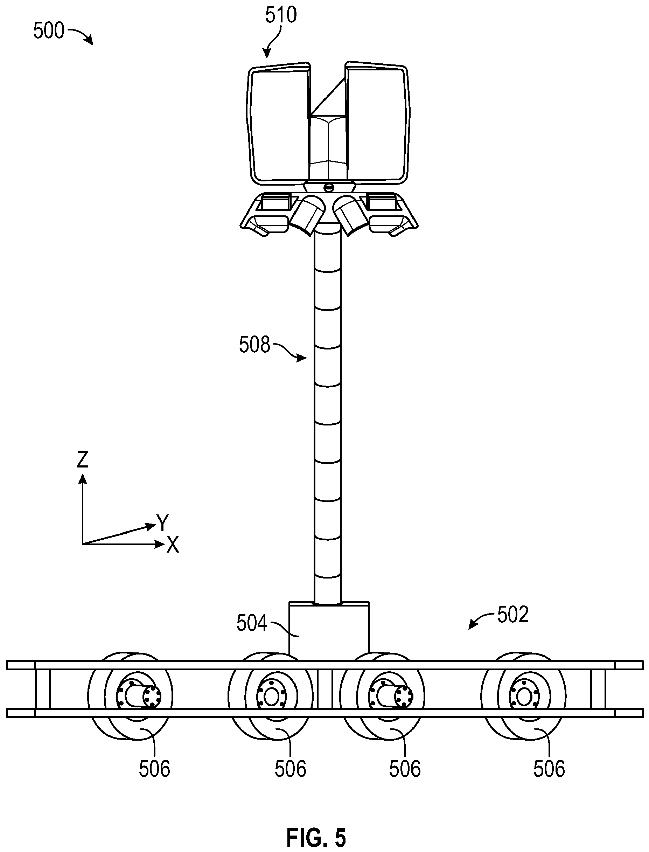

Turning now to FIG. 5, a schematic illustration of a mobile scanning system 500 having a mobile apparatus 502 is shown. The mobile apparatus 502, in this embodiment, is a mobile platform that includes a base structure 504 and a plurality of wheel structures 506. The base structure 504 can include various internal components configured to enable movement of the mobile apparatus 502 by operation, actuation, and control of the wheel structures 506. Such internal components can include, without limitation, processors, electronic circuits, electronic actuators, communication lines, power sources, and the like. The base structure 504 includes a scanner support 508 to which a scanner 510 can be mounted. The scanner 510 may be similar to that shown and described above in FIGS. 1A-3, although other types of scanners may be employed in accordance with embodiments of the present disclosure. In some embodiments, the scanner 510 may be a coordinate measurement device in the form of a laser tracker, a total station, a triangulation scanner, a line scanner, a structured light scanner, a photogrammetry device, or other 3D coordinate measuring device for example. For example, the scanner 510 may be a laser tracker in a general sense and may include a time-of-flight (TOF) scanner, a total station, or other related metrology or measurement device(s). The scanner may employ lasers, superluminescent diodes, light emitting diodes (LEDs), or other light source for performing TOF measurements, as will be appreciated by those of skill in the art.

The wheel structures 506 may be controlled to enable a rolling or translating motion of the mobile apparatus 502 through an environment. The movement of the mobile apparatus 502 may be controlled by an operator (e.g., remote-controlled) or may be autonomously operated using internal components. The wheel structures 506 may be configured to move in any combination of the x- and z-directions. If a scan is to be obtained by the scanner 510 during movement of the mobile apparatus 502 through an environment, the rolling motion of the wheel structures 506 may impact the ability to obtain an accurate scan. This is particularly true if the mobile apparatus 502 is traversing over an uneven surface or a surface with debris thereon. Such motion and interaction with the surface/debris may cause vibrations or shocks and may change the calibration of the scanner 510 outside of a desired limit or range, or otherwise impact a desired accuracy level of a scan.

In other embodiments, the mobile apparatus may be that shown and described in commonly owned United States Patent Publication 2020/0109937, entitled System and Method of Defining a Path and Scanning an Environment, the contents of which are incorporated by reference herein. In such an embodiment, the scanner is coupled to the post by a gimbal as is described in more detail herein.

Shocks and vibrations may be caused by movement about different axes within the x-y-z coordinate system. For example, with reference to FIG. 4, an a-axis of rotation is about a line perpendicular to the y-z plane, a b-axis of rotation is about a line perpendicular to the x-z plane, and a c-axis of rotation is about a line perpendicular to the x-y plane. Steps of a legged robot or interactions with a non-uniform surface can cause shocks on every impact with the ground. In some embodiments, when using a 4-legged walking robot, the shocks and vibrations cause rotation or a moment along the a-axis that is undesired. This is due to the distance between the ends of the legs of the of the legged robot that contact the ground/surface. Because the distance between the legs in a side-to-side direction is small, an associated impact is smaller than between a front-to-back direction of motion. The shock in such motion is caused by the movement between the left and right legs. In some embodiments, the second most affected axis is the b-axis.

Because of these shocks/impacts, a scanner mount in accordance with the present disclosure can be used to reduce, minimize, or even eliminate the impact/influence of movement of the mobile scanning system. In some embodiments, a scanner mount may include a single-axis gimbal. Such single-axis gimbal can reduce shocks along/about a single axis (e.g., the a-axis). Such single-axis gimbal can compensate for most stepping shocks and vibrations. In other configurations, a two-axis gimbal or a three-axis gimbal may be employed to reduce and/or eliminate shocks/vibrations along/about the b-axis and/or the c-axis.

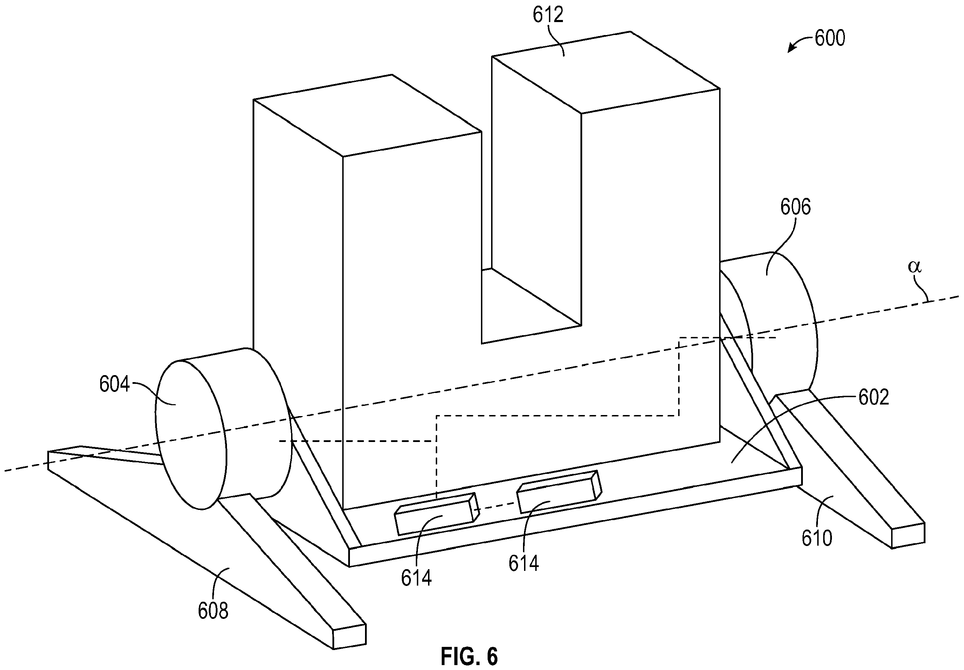

Turning now to FIG. 6, a schematic illustration of a scanner stabilizing system 600 in accordance with an embodiment of the present disclosure is shown. The scanner stabilizing system 600 is configured to be mounted to a mobile scanning system, such as a mobile robot or mobile platform (e.g., as shown and described above with respect to FIGS. 4-5). The scanner stabilizing system 600, in this illustrative embodiment, includes a moving base 602 that moves about an axis α (e.g., a swinging motion). The moving base 602 is movably attached to a first motor 604 at a first side and a second motor 606 at a second side. The motors 604, 606 are supported upon mounting structures 608, 610, respectively. The moving base 602 is configured to support a scanner 612. In accordance with some embodiments, the motors 604, 606 may be brushless DC motors. The mounting structures 608, 610 are configured to fixedly attach to a mobile apparatus and/or a mobile scanning system.

As shown, the scanner 612 sits on top of the moving base 602. The moving base 602 is moved around the rotational axis α, aided by operation of the motors 604, 606. The motors 604, 606 may be controlled to have the scanner 612 in a plane (e.g. a level, horizontal position when the mobile platform is on flat level surface) relative to the axis α independent of the position of the motors 604, 606. To provide a stable platform, the scanner stabilizing system 600 may provide active balancing or leveling by operation of the motors 604, 606. In order to provide such active balancing or leveling, the current position or orientation of the moving base 602 may be known. To obtain the current position of the moving base 602, an inertial measurement unit (IMU) 614 is mounted or otherwise affixed to the moving base 602. By knowing the current position of the moving base 602 from the IMU 614, a proportional-integral-derivative (PID) controller 616 can control or otherwise operate the motors 604, 606 precisely to adjust the position/orientation of the scanner 612 quickly to a desired plane (e.g. horizontal) position. That is the IMU 614 may be operably connected to or otherwise in communication with the PID 616, and the PID 616 may be operably connected to or otherwise in communication with the motors 604, 606 to enable control thereof. As such, the scanner stabilizing system 600 can smoothen out quick movements, and therefore provide the scanner 612 with a smooth motion instead of hard bumps, vibrations, and/or shocks.

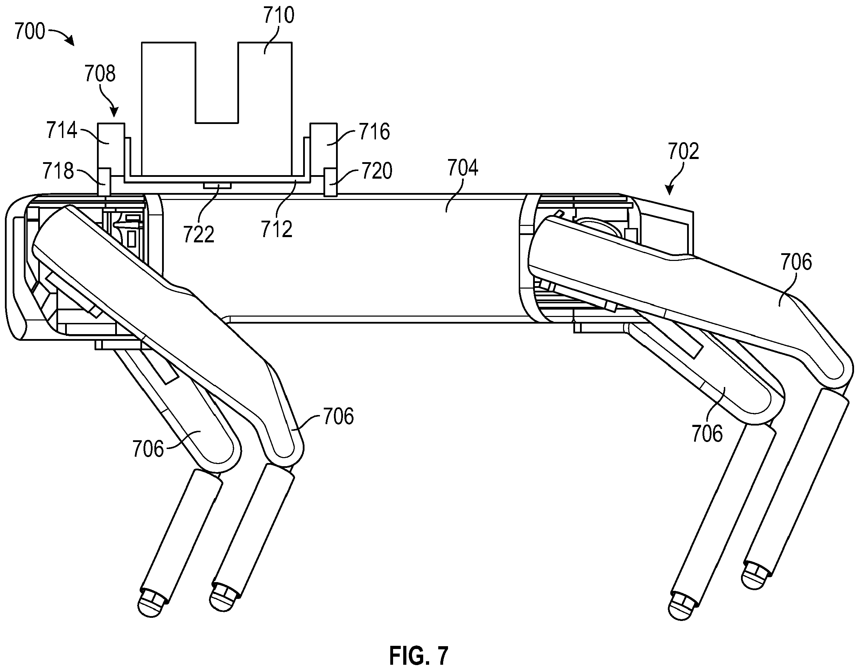

Turning now to FIG. 7, a schematic illustration of a mobile scanning system 700 having a mobile apparatus 702 is shown. The mobile apparatus 702 in this configuration is a legged robot having a trunk structure 704 and a plurality of leg structures 706. The trunk structure 704 can include various internal components configured to enable movement of the mobile apparatus 702 by operation, actuation, and control of the leg structures 706. Such internal components can include, without limitation, processors, electronic circuits, electronic actuators, communication lines, power sources, and the like. The trunk structure 704 includes a top surface to which a scanner stabilizing system 708 can be mounted. The scanner stabilizing system 708, as shown, supports a scanner 710 can be mounted. The scanner 710 may be similar to that shown and described above in FIGS. 1A-3, although other types of scanners may be employed in accordance with embodiments of the present disclosure.

The scanner stabilizing system 708, in this illustrative embodiment, includes a moving base 712 that is movably supported by a first motor 714 and a second motor 716. The motors 714, 716 are supported upon mounting structures 718, 720, respectively. The mounting structures 718, 720 are mounted or otherwise affixed or attached to the top surface of the trunk structure 704. The moving base 712 is configured to support the scanner 710 and ensure stability and/or levelness of the scanner 710 during movement of the mobile apparatus 702. The movement or stabilization of the scanner 710 by operation of the motors 714, 716 may be controlled by a stabilization controller 722. The stabilization controller 722 is operably connected to the motors 714, 716 and configured to control operation thereof. Further, the stabilization controller 722 may include one or more components for monitoring and detecting a position or orientation of the moving base 712. For example, the stabilization controller 722 can include an IMU and PID. The IMU and PID may be integrated into a single controller element or may be discrete components. The stabilization controller 722 may include a power source, such as a battery or the like.

Although FIG. 7 illustrates the scanner stabilizing system 708 as mounted to a legged robot 702, a similar mounting configuration may be employed with dolly-type systems and/or other types of mobile scanning systems. Further, although described with a single axis compensation in the scanner stabilizing system, multi-axis configurations are possible without departing from the scope of the present disclosure.

Advantageously, embodiments described herein provide for scanner stabilizing system for use with a scanner or coordinate measurement device and a mobile scanning system. The mobile scanning system can provide for mobility of the scanner within an environment while maintaining stability by use of the scanner stabilizing system. Furthermore, in some embodiments, autonomous operation may be implemented with the mobile scanning system and/or the scanner stabilizing system of the present disclosure. Active compensation for changes in position/orientation of the scanner are achieved through the use of one or more motors that can adjust an orientation of a scanner relative to a mobile system (e.g., robotic legged apparatus or rolling dolly configuration).

While the present disclosure has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

## Claims

1. A scanner stabilizing system comprising:
a moving base configured to receive a scanner;
at least one motor operably connected to the base to control at least one of an orientation and a position of the moving base about an axis;
at least one mounting structure configured to fixedly attached to a mobile apparatus and wherein the at least one motor is attached to a respective one of the at least one mounting structures; and
a stabilization controller operably connected to the at least one motor, wherein the stabilization controller is configured to maintain an orientation of the scanner relative to an environment.

2. The scanner stabilizing system of claim 1, wherein the stabilization controller includes an inertial measurement unit (IMU).

3. The scanner stabilizing system of claim 1, wherein the stabilization controller includes a proportional-integral-derivative (PID) controller.

4. The scanner stabilizing system of claim 1, wherein the at least one motor is a brushless DC motor.

5. The scanner stabilizing system of claim 1, wherein the at least one motor comprises a first motor and a second motor.

6. The scanner stabilizing system of claim 5, wherein an axis is defined through the first motor and the second motor.

7. The scanner stabilizing system of claim 1, wherein the orientation of the scanner relative to the environment is a horizontal orientation.

8. The scanner stabilizing system of claim 1, further comprising a scanner mounted to the moving base.

9. A system comprising:
a mobile apparatus;
a scanner stabilizing system according to any one of claims 1 to 7; and
a scanner mounted to the moving base;
wherein the at least one mounting structure of the scanner stabilizing system is fixedly attached to the mobile apparatus.

10. The system of claim 9, wherein the scanner is a laser scanner.

11. The system of claim 9, wherein the mobile apparatus is a legged robot.

12. The system of claim 11, wherein the legged robot comprises a trunk structure and a plurality of leg structures, wherein the at least one mounting structure of the scanner stabilizing system is attached to the trunk structure.

13. The system of claim 9, wherein the mobile apparatus is a mobile platform having a base structure and a plurality of wheel structures, wherein the at least one mounting structure of the scanner stabilizing system is attached to the base structure.
